# EUROPEAN PATENT APPLICATION

(11) **EP 1 632 449 A1**
(43) Date of publication of application: **08.03.2006**
(21) Application number: 03723387.1
(22) Date of filing: 15.05.2003
(51) Int. Cl.: B65H 55/02

(54) **METHOD OF MANUFACTURING THERMOPLASTIC RESIN CORD WOUND BODY**

(71) Applicant: Sekisui Jushi Kabushiki Kaisha, Osaka-shi, Osaka 530-0047 (JP)
(72) Inventor: YAMANE, Susumu, Ishikawa-gun, Ishikawa 921-8842 (JP); TAJIKA, Satoru, Ishikawa-gun, Ishikawa 921-8802 (JP); MARUTANI, Tetsuya, Moriyama-shi, Shiga 524-0046 (JP)
(74) Representative: Harland, Linda Jane
(86) International application number: PCT/JP2003/006083
(87) International publication number: WO 2004/101416

(57) **Abstract**

A method for producing a thermoplastic resin string roll of the present invention uses a core made of a plurality of core pieces that are arranged along a circumference and can move back and forth in a diameter direction, the outer faces of the core pieces forming a part of a cylinder when the core pieces are extended in the diameter direction. The end of a thermoplastic resin string is fixed, while the core pieces of the core are extended in the diameter direction. Then, the core is rotated to wind the thermoplastic resin string a plurality of times around the periphery of the core. Thereafter, supersonic vibration is applied to a plurality of layers of the thermoplastic resin string that is wound round the core via a horn, thereby causing frictional heat, so that the plurality of layers of the thermoplastic resin string are connected by thermal fusion due to the frictional heat, and then the thermoplastic resin string is wound to produce a roll. The plurality of layers of the thermoplastic resin string are connected by inserting the horn in the thermoplastic resin string and drilling while melting.

## Description

### TECHNICAL FIELD

The present invention relates to a method for producing a thermoplastic resin string roll, more specifically, to a method for producing a thermoplastic resin string roll without a core.

### BACKGROUND OF THE INVENTION

One example of a method for producing a thermoplastic resin string roll without a core is disclosed in JP 2000-344422A. With this method, a through-hole is provided in stacked resin string layers inside of a coil, and the resin string is connected by integrating the periphery of the through-hole. As a method of forming a through-hole and integrating the resin string in this manner, a method of penetrating and integrating in the diameter direction from the center of the coil, using a heated needle in the process of winding, a supersonic welding method and the like are disclosed.

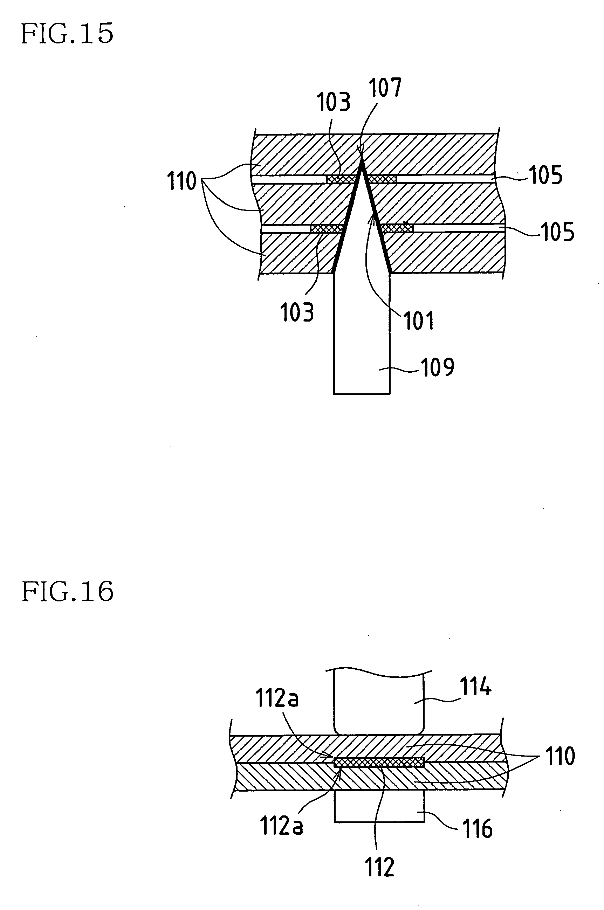

In the method using a heated needle, as shown in FIG. 15, a heated needle 109 is penetrated from the inside of a string 110. In this method, a melted fusible resin 103 enters openings 105 near a through-hole 101. Moreover, a non-penetrating hole 107 tends to be formed. In this method, in order to obtain an appropriate bond strength (peel strength), it is necessary to control appropriately many variable factors, such as the temperature of production atmosphere, insertion time, and heater temperature.

On the other hand, in a supersonic welding method, as shown in FIG. 16, in a state where at least two layers of a string 110 are sandwiched between a horn 114 and an anvil 116, supersonic vibration is applied to the string 110 by the horn 114 , and a melted-junction portion 112 is formed by frictional heat through that vibration. Concerning the horn 114 that is used in this method, in the case where the area that the horn 114 and the string 110 contact is large, the bonding strength is so strong that the string cannot be peeled off when pulling out the string from the reel and cannot be used up to the end. On the other hand, in the case where the area is too small, the peel strength weakens and when the string can be peeled off easily when pulling out the string, but the fibred resin is drawn out at the interface of the melted-junction portion 112 of the string 110 that constitutes a stretched fibered layer, so that the string cannot be pulled out smoothly. Therefore, in the case of using the supersonic welding method, it is necessary to constitute a structure, considering such matters.

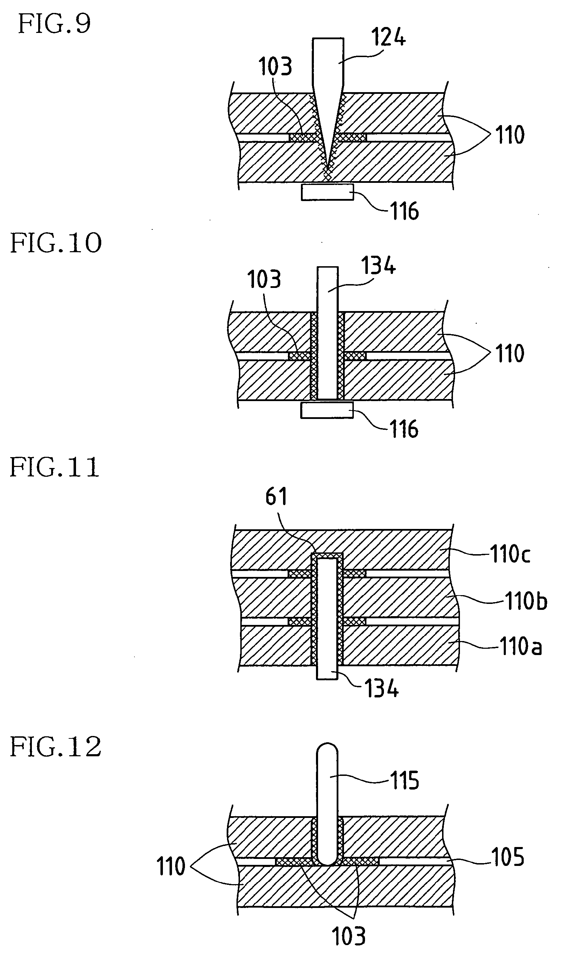

Moreover, in structures provided with such an anvil, as in FIGS. 9 and 10, resin pressed by a horn 124 or a horn 134 enters between the string 110 ... 110 by the volume of the horn that was inserted. The resin 103 that has entered causes the peel strength to be excessive, and therefore a structure without anvil is desirable.

On the other hand, it is possible to constitute a structure without an anvil, for example a structure where the horn 134 is inserted from the inside, as shown in FIG.11, when the size of the horn or oscillator can be reduced. However, since it is necessary to adjust the depth of insertion of the horn 134, it is rather preferable to have a structure where the horn is inserted from the outside. Also, in the case where the string is at least three layered, it is necessary to consider the fact that an interface 61 can be formed easily between the melted portion and the string that is constituted by a stretched fibered layer.

Further, in the case where the end shape of the horn is round, as shown in FIG. 12, the resin pushed by a horn 115 can enter the space between the string 110 ... 110 easily. Considering that, it is desirable to have a flat end shape.

Concerning thermoplastic resin strings used for packaging, in the case where the packaged goods are heavy goods, strings made of polyester are used for that. The important thing about such polyester strings is obviously that they are able to stand the heaviness of such packages.

That means that as the coreless rolls of thermoplastic resin strings, for example, polypropylene strings or polyester strings can be used, but it is preferable to constitute a structure, considering the characteristics and usage of these materials. In the following, the characteristics of these materials and the problems in the case of using such materials as packaging strings will be explained.

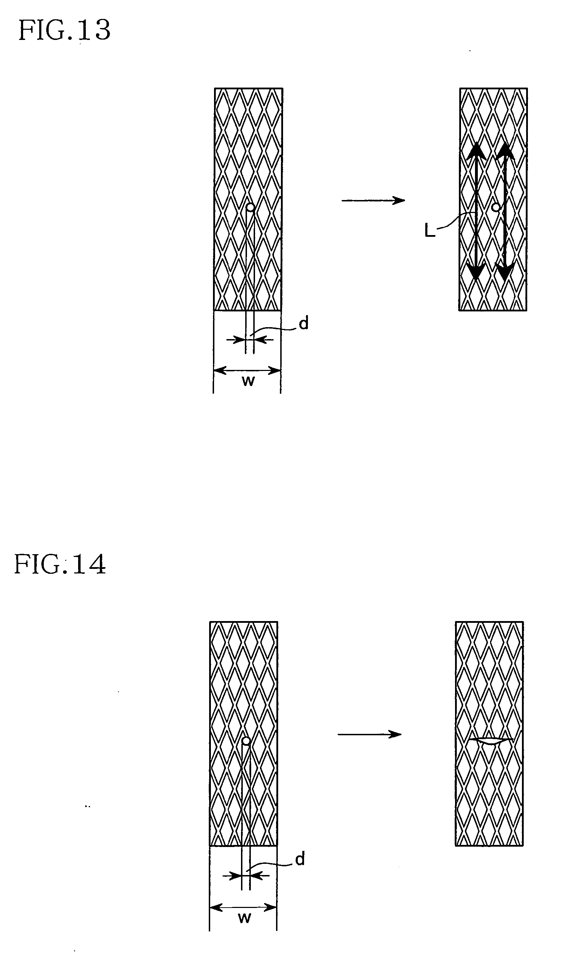

Table 1 below shows the respective characteristics of polypropylene strings and polyester strings. The diameter d of the through-hole of each string is 1 mm and the string width w is 15.5 mm. FIG. 13 is a diagram that explains the characteristics of thermoplastic resin strings made of polypropylene, and FIG.14 is a diagram that explains the characteristics of thermoplastic resin strings made of polyester.

In case a method is used that integrates the peripheral portion of a through-hole in a thermoplastic resin string for bonding, in the case of polypropylene strings, the intensity decreases by 1 mm (diameter a) / 15.5 mm (band width b) as shown in Table 1, while in the case of polyester strings, the intensity decreases by (1 mm or more / 15.5. mm), which is a decrease of the hole diameter or more. That means, as for polypropylene thermoplastic resin strings, because stretching fiberization proceeds in the longitudinal direction (direction L in FIG. 13), it does not tear in the width direction. Contrary to this, even when polyester strings are stretched, there is no remarkable fiberization proceeding in the longitudinal direction, therefore the notch strength in the width direction is low. As a result, it tears easily in width direction as shown in FIG. 14. Therefore there is a risk that the strings rupture for rolls that is produced using the method of completely penetrating a thermoplastic resin string made of polyester, when tightening packages of heavy goods with a baler or while transporting packages of heavy goods.

**Table 1**

| Material | Polypropylene String | Polyester String |
|---|---|---|
| Stretching factor | 7 to 16 times | 4 to 7 times |
| Tensile strength of string | 160 kg | 250 kg |
| Tensile Strength of hole | 150 kg | 150 kg |
| Regarding strength decrease | the strength decreases by 1mm (hole diameter a) / 15.5 mm (band width b) | the strength decreases by the hole diameter or more (1mm or more/ 15.5 mm) because of rupture to tear laterally. |

In view of the conventional technology described above, the present invention has a first object to provide a method for producing a coreless roll of a thermoplastic resin string, in which no collapses inside of the coreless roll of the thermoplastic resin string, no vertical splits of the string or no thread drawn from the string surface occur while in use. Furthermore, it is a second object to realize a coreless roll of a thermoplastic resin string, in the case where a polyester string is used as the thermoplastic resin string, whose tensile strength decrease is low, and that have an appropriate peel strength, and thereby to provide a method for producing a coreless roll that allows the string to be drawn smoothly out of the reel of a baler.

### DISCLOSURE OF THE INVENTION

In order to achieve the above-described objects, a method for producing a thermoplastic resin string roll of the present invention includes using a core made of a plurality of core pieces that are arranged along a circumference and can move back and forth in a diameter direction, the outer faces of the core pieces forming a part of a cylinder when the core pieces are extended in the diameter direction; fixing an end of a thermoplastic resin string while the core pieces of the core are extended in the diameter direction, rotating the core to wind the thermoplastic resin string a plurality of times around the periphery of the core; applying supersonic vibration to a plurality of layers of the thermoplastic resin string that is wound round the core via a horn, thereby causing frictional heat, so that the plurality of layers of the thermoplastic resin string are connected by thermal fusion due to the frictional heat; and winding continuously the thermoplastic resin string, wherein the plurality of layers of the thermoplastic resin string are connected by inserting the horn in the thermoplastic resin string and drilling while melting.

This constitution may be such that a core in which a groove is formed on the outer face of each of the core pieces may be used, and the horn is inserted in the plurality of layers of the thermoplastic resin string that cover the groove, and the plurality of layers of the thermoplastic resin string is drilled while being melted, to form a through-hole that penetrates the plurality of layers of the thermoplastic resin string that cover the groove.

With this constitution, where the horn penetrates a plurality of layers of a thermoplastic resin string, the stretched fibered layer can be divided so that no thread is drawn.

Furthermore, in the above constitution, a contact portion of the horn may be in the peripheral surface of the plurality of layers of the thermoplastic resin string, and the thermoplastic resin string may be drilled from the peripheral surface toward the inner surface while being melted.

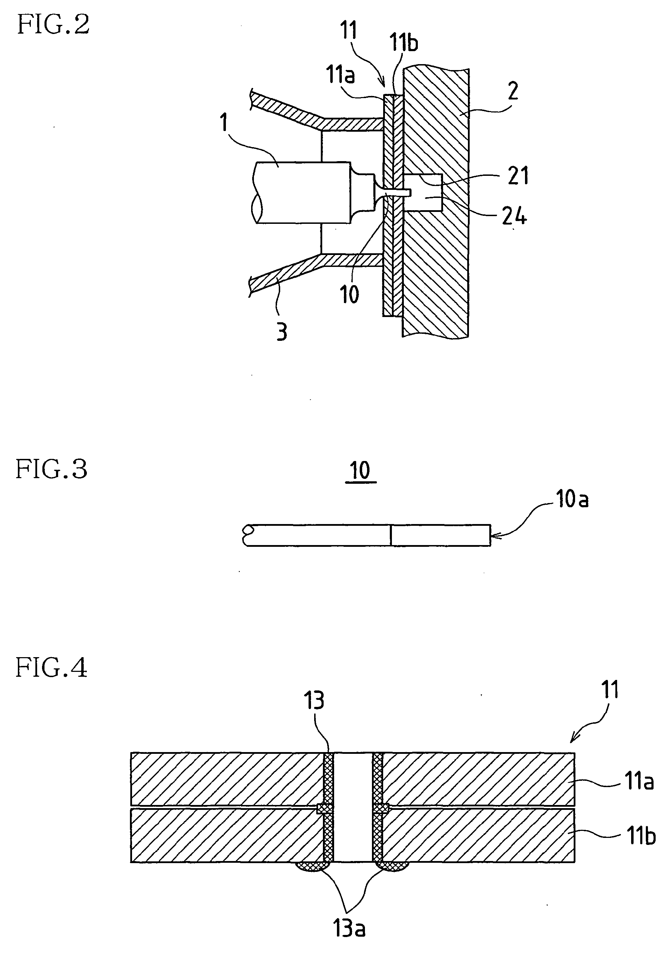

With this constitution, for example, as shown in FIG. 4, only the resin 13, which is of the resin amount necessary for bonding, remains between the strings 11a and 11b, and needless surplus resin 13a is pushed out into the groove of the core piece and discharged to the inside of the string 11.

In this constitution, it is preferable that in a method of forming a through-hole, the horn has a cylindrical shape, and the diameter thereof is 1 mm or less. This is because the peel strength of the string becomes larger as the periphery of the horn becomes longer, so that when the diameter exceeds 1 mm, the string tears easily.

Furthermore, instead of the above constitution in which the through-hole is formed, the thermoplastic resin string may be drilled while being melted by inserting the horn in one outermost layer of the plurality of layers of the thermoplastic resin string to a depth of insertion that does not reach the thickness of the outermost layer of the thermoplastic resin string.

With this constitution, the through-hole is not formed in the string, so that the decrease in the tensile strength is low and an appropriate peel strength can be obtained.

Furthermore, in this constitution, it is preferable that the depth of insertion is 4 / 5 or less of the thickness of the outermost layer of the thermoplastic resin string in view of the tensile strength.

In this constitution, it is preferable that the horn has a cylindrical shape, and the diameter thereof is 2 mm or less. This is because the diameter of 2 mm corresponds to the upper limit of the peel strength.

In the above constitutions, that is, either a constitution in which a through-hole is formed or a constitution in which a through-hole is not formed, it is preferable that the plurality of layers of the thermoplastic resin string that are to be connected are two layers. This is because when a bonding process is performed to three or more layers of the thermoplastic resin string, an interface tends to be formed between the melted junction and the string constituted by a stretched fibered layer, which can be avoided with this constitution.

Furthermore, it is preferable that the horn has a flat end surface. With this constitution, the melting volume is substantially constant, and little resin can enter the gaps of the string, so that the fused portion can be formed stably. In addition, surplus resin can be discharged efficiently.

### BRIEF DESCRIPTION OF DRAWINGS

FIG. 1 is a diagram that explains the structure of a relevant portion of Embodiment 1 of the present invention over time.
FIG. 2 is a cross-sectional view that shows the state when the horn has penetrated the thermoplastic resin string in Embodiment 1 of the present invention.
FIG. 3 is a diagram that shows the horn used for the embodiments of the present invention.
FIG. 4 is a diagram that explains the function of Embodiment 1 of the present invention.
FIG. 5 is a diagram that shows the method for producing rolls of Embodiment 1 of the present invention over time.
FIG. 6 is a diagram that explains the structure of a relevant portion of Embodiment 2 of the present invention over time.
FIG. 7 is a graph that shows data to explain the function and effect of Embodiment 2 of the present invention.
FIG. 8 is a diagram that shows comparison data to explain the function and effect Embodiment 2 of the present invention.
FIG. 9 is a diagram that explains the structure in a supersonic welding method provided with an anvil in which the horn shape is replaced by a needle shape.
FIG. 10 is a diagram that explains the structure in a supersonic welding method provided with an anvil in which the horn shape is replaced by a cylinder shape.
FIG. 11 is a diagram that explains a production method in the case of three layered thermoplastic resin string by the use of supersonic welding methods with no anvil.
FIG. 12 is a diagram that explains the case that a horn with a round end shape is applied in a supersonic welding method.
FIG. 13 is a diagram that explains the characteristics of thermoplastic resin strings made of polypropylene.
FIG. 14 is a diagram that explains the characteristics of thermoplastic resin strings made of polyester.
FIG. 15 is a diagram that explains methods for producing thermoplastic resin strings in which a conventional heated needle is used.
FIG. 16 is a diagram that explains a method for producing thermoplastic resin strings in which a conventional supersonic welding method is used.

### BEST MODE FOR CARRYING OUT THE INVENTION

A roll produced by a production method of an embodiment of the present invention is formed by multiple windings of a thermoplastic resin string with a hollow portion formed. This thermoplastic resin string is made of olefin resin of polypropylene that has been stretched about 5 to 10 times so that the tensile strength has been remarkably increased, and thermoplastic resin strings having a width of about 10 mm to 20 mm and a thickness of about 0.3 to 1 mm are usually often used. For the thermoplastic resin string, any materials that increase the tensile strength through stretching, for example, polyester or polyamide can be used. Such a thermoplastic resin string being wound up to 1000 m to 2500 m makes one roll. Regarding the measures of this roll, the width is about 100 mm to 250 mm, the inner diameter is about 200 mm to 410 mm, the outer diameter is about 300 mm to 650 mm, and the weight is about 10 kg to 25 kg. In a roll formed by multiple winding of the thermoplastic resin string in coil shape without a core, the thermoplastic resin string that is stacked in the vicinity of the end portion at the beginning of the roll is mutually connected so as to form a loop element.

Hereinafter an embodiment in which the supersonic welding method is used in the process for forming the loop element will be described with reference to the drawings.

### < First Embodiment >

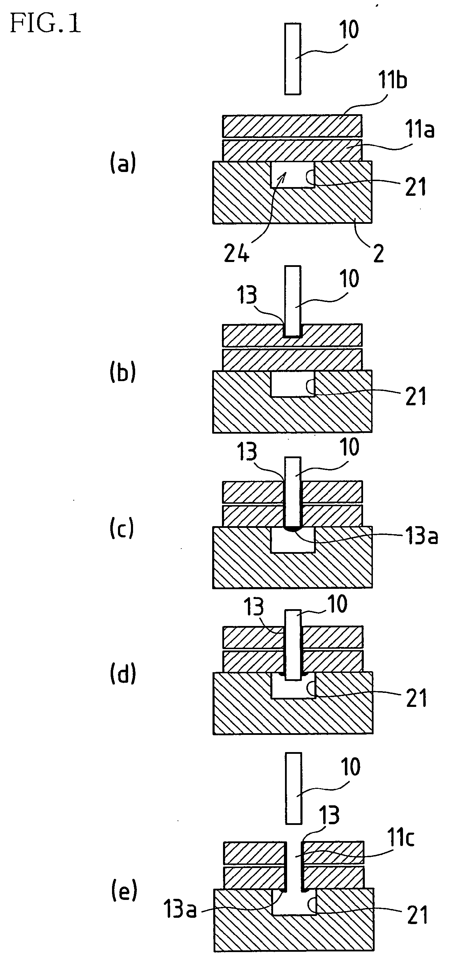

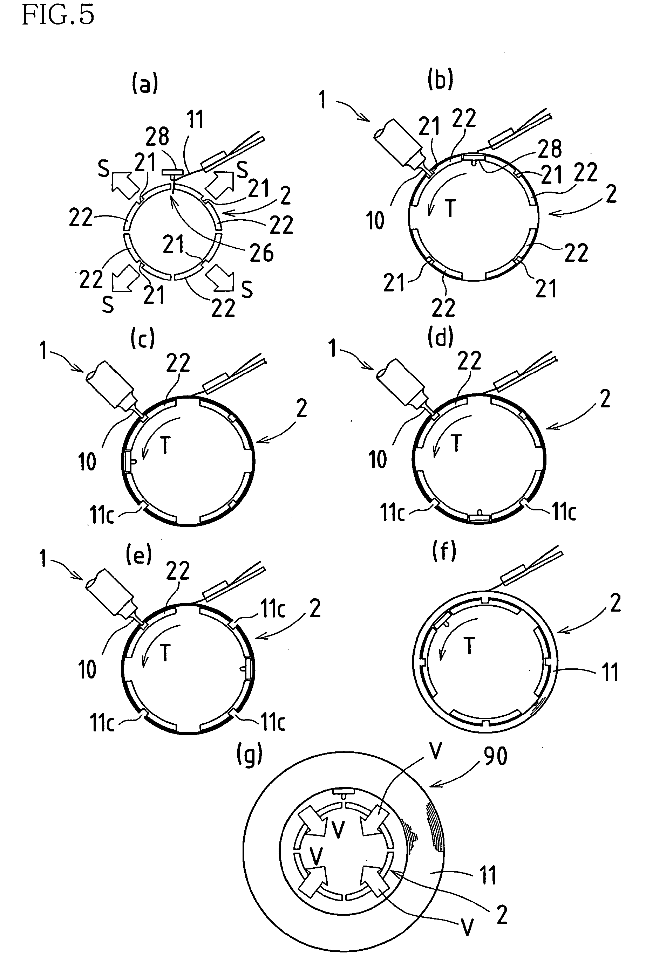

FIG. 1 is a diagram that explains the structure of a relevant portion of Embodiment 1 of the present invention over time. FIG. 2 is a cross-sectional view that shows the state when the horn has penetrated the thermoplastic resin string in Embodiment 1 of the present invention. FIG. 3 is a diagram that shows the horn used for the embodiments of the present invention. FIG. 4 is a diagram that explains the function of Embodiment 1 of the present invention. FIG. 5 is a diagram that shows the method for producing a roll of Embodiment 1 of the present invention over time.

In this production method , winding of a thermoplastic resin string 11 is performed, using a core 2 and a supersonic welding machine 1. This supersonic welding machine 1 is provided with a cylindrical horn 10 as shown in FIG 3. The end 10a of the horn 10 is flat and preferably has a diameter of 1 mm or less. That is because in this embodiment, the bigger the diameter is, the longer the perimeter becomes and the larger the peel strength becomes. That means that when the diameter of the horn 10 exceeds 1mm, the thermoplastic resin string tears easily. The horn 10 is made of a titanium alloy and is superior in durability.

Hereinafter, the production method of the present invention will be explained.

First, as shown in FIG. 5(a), the core 2 is arranged along the circumference and consists of 4 core pieces 22 ... 22, each of which can move back and forth in the diameter direction (direction S). The core is configured such that when these core pieces 22 ... 22 are extended in the diameter direction, the outer surface of each of the core pieces 22 ... 22 forms a part of a cylindrical surface. As each of the core pieces, a core piece that is provided with a groove 21 in its outer surface. As shown in FIGS. 1 and 2, when the horn 10 of the supersonic welding machine 1 penetrates the thermoplastic resin string 11, a cavity 24 of the groove 21 has the size to accommodate the end portion of the horn 10 and constitutes a portion for receiving the horn tip. Moreover, this supersonic welding machine 1 is provided with a cover 3 to cover the end portion.

Then, as shown in FIG. 5(b), the core pieces 22 ... 22 are extended in the diameter direction and are arranged along approximately the same circumference. Thereafter, the end of the thermoplastic resin string 11 is fixed to a gap 26 that is one of the gaps of the core parts 22 ... 22 while being clipped with a string clip 28, rotated to the direction shown by an arrow T, and is wound a plurality of times in coil shape to form two layers. Then, as shown in FIGS. 1(a) to 1(c) in detail, supersonic vibration (15 to 60 kHz) is applied in a state where the end of the horn 10 of the supersonic welding machine 1 is pressed against the peripheral surface of the outer thermoplastic resin string (11b) in the position that covers the groove 21 of the two layered thermoplastic resin string (11a, 11b) that is wound around the core 2, and the horn 10 is inserted in the two layered thermoplastic resin string (11a, 11b) so that a through-hole 11c is formed by drilling while melting the two layered thermoplastic resin string (11a, 11b). By forming the through-hole 11c, the stretched fibered layer of the two layered thermoplastic resin string 11 is divided, so that no thread is drawn.

Moreover, as shown in FIGS. 1(c) and 1(d), only the resin 13, which is of the resin amount that is necessary for bonding remains in the space between the thermoplastic resin string 11a and the thermoplastic resin string 11b, and the needless surplus of the resin 13a is pushed to the groove 21 of the core piece and is discharged into the inside of the thermoplastic resin string 11. Through the process described above, the two layered thermoplastic resin string 11 is melted for bonding, and connected.

Furthermore, as shown in FIG. 1(e), the horn 10 is drawn back from the through-hole 11c and brought back to its original position.

Thereafter, the core 2 is rotated slightly and, as shown in FIG. 5(c) to 5(e), the end of the horn 10 of supersonic welding machine 1 is pressed against different positions of the two layered thermoplastic resin string 11, and the two layers 11a, 11b of the thermoplastic resin string are melted for bonding, and connected in the same manner as above.

After the thermoplastic resin string 11 is melted for bonding at a plurality of different positions in this manner, as shown in FIG. 5(f), the thermoplastic resin string 11 having a predetermined length is wound to a coil shape by rotating the core 2 in the direction shown by the arrow T. Thus, a roll 90 is completed, as shown in FIG. 5(g). Thereafter the core 2 is moved back in the direction shown by the arrow V and closed, so that the roll 90 is taken out.

### < Second Embodiment >

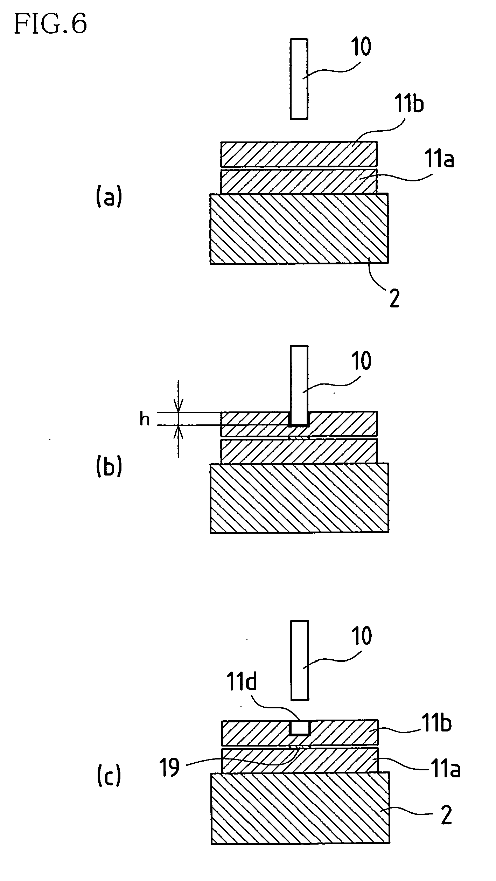

In this embodiment, a method for producing a coreless roll in the case of using a polyester string as a resin string that is used for packaging heavy goods will be explained:
As described above, polyester strings have the characteristic that fiberization does not proceed in the longitudinal direction as much as polypropylene strings, and therefore tear easily in the width direction. In case of such a polyester string, in the production process shown in FIG. 5, a method of welding using the supersonic welding machine 1 is different. The horn 10 that is used here has a cylindrical shape and a flat end surface. Furthermore, considering the upper limit of the peel strength, the diameter of horn 10 is not greater than 2 mm. Such a supersonic welding machine 1 provided with such a horn 10 is used. FIG. 6 shows diagrams that explains the structure of a relevant portion of Embodiment 2 of the present invention over time. Moreover, apart from the process of welding, there is no difference from Embodiment 1, the explanation will be omitted.

In this embodiment, as shown in FIGS. 6(a) and 6(b), supersonic vibration (15 to 60 kHz) is applied while the end of the horn 10 of the supersonic welding machine 1 is pressed against the peripheral surface of the thermoplastic resin string 11b wound around the core 2, and the horn 10 is inserted only in the first layer of the thermoplastic resin string 11b. It is preferable that the depth h of insertion of the horn 10 is not greater than 4 / 5 of the thickness of the thermoplastic resin string 11b from the aspect of tensile strength. Then, as shown in FIG. 6(c), the horn 10 is drawn out of the insertion hole 11d and brought back to its original position.

By the process described above, a melted junction portion 19 is formed between the thermoplastic resin string 11a and 11b.

Similarly to Embodiment 1, the bonding process is performed to each of the core pieces 22 ... 22, and then as shown in FIG. 5(f), the core 2 is rotated in the direction shown by the arrow T, so that the thermoplastic resin string 11 having a predetermined length is wound to a coil shape. Thus, a roll 90 is completed, as shown in FIG. 5 (g). Thereafter , the core 2 is moved back in the direction shown by the arrow V and closed, so that the complete roll 90 is taken out.

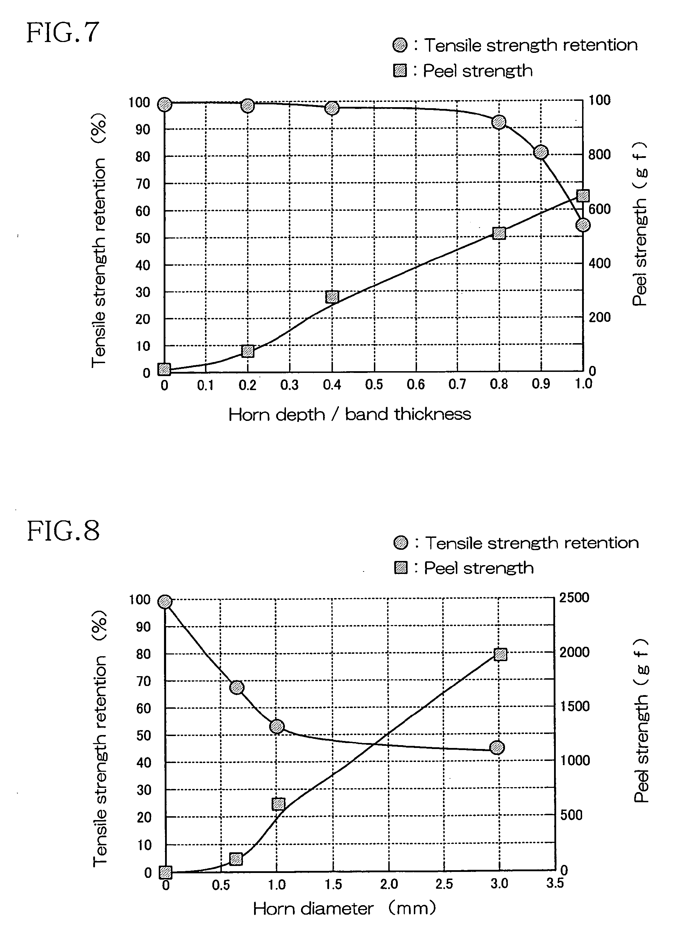

FIG. 7 shows the relationship between the ratio of the depth of insertion of the horn to the thickness of the thermoplastic resin string, and the tensile strength retention and the peel strength in the method of production of Embodiment 2.

The tensile strength of the fused portion in an automatic baler with a polyester string is about 90% of the strength of the material, and it is believed that the tensile strength retention necessary for practical use is 90% or more. Moreover, the peel strength is preferably 200 gf or more, but not more than 1500 gf so that the roll does not collapse. From this point of view, in the production method of Embodiment 2, the ratio of the thickness of the thermoplastic resin string to the insertion depth of the horn is 0.8% or less, and it is verified that if it is 0.8% or less and not less than 0.35%, the decrease of the tensile strength is low and the peel strength is appropriate.

On the other hand, in the method of production in Embodiment 2, in the case where a through-hole is provided in the thermoplastic resin string, as evident from FIG. 8 showing the relationship between the horn diameter, and the tensile strength retention and the peel strength, although an appropriate peel strength can be achieved, depending on the horn diameter, the retention strength retention significantly decreases, so that the roll cannot be put in practical use.

In particular, in the case where a horn diameter of 0.5 mm is used, no satisfying results can be achieved, concerning the tensile strength retention and the peel strength.

The horn 10 that is used in the above embodiments is constituted by a titanium alloy, but the present invention is not limited thereto, and can be made of a material such as iron.

### INDUSTRIAL APPLICABILITY

As described above, the method for producing a coreless roll of a thermoplastic resin string of the present invention can produce a coreless roll of a thermal plastic resin string in which the inside of the coreless roll of a thermoplastic resin string does not collapse, the string can be pulled out of the baler reel smoothly while in use, no threads is drawn from the surface, and no vertical splits occur in the string. Furthermore, also in the case where a polyester string is used for the thermoplastic resin string, a coreless roll that has a low decrease of tensile strength and an appropriate peel strength can be produced. Therefore, it is possible to use up the roll of a thermoplastic resin string to the end, which is economical. Furthermore, the present invention is useful in that by applying the production method of the present invention as appropriate, depending on the material of the thermal plastic resin string, the present invention can be used also for packaging heavy goods.

## Claims

1. A method for producing a thermoplastic resin string roll, comprising:
using a core made of a plurality of core pieces that are arranged along a circumference and can move back and forth in a diameter direction, the outer faces of the core pieces forming a part of a cylinder when the core pieces are extended in the diameter direction,
fixing an end of a thermoplastic resin string while the core pieces of the core are extended in the diameter direction,
rotating the core to wind the thermoplastic resin string a plurality of times around the periphery of the core,
applying supersonic vibration to a plurality of layers of the thermoplastic resin string that is wound round the core via a horn, thereby causing frictional heat, so that the plurality of layers of the thermoplastic resin string are connected by thermal fusion due to the frictional heat, and
winding continuously the thermoplastic resin string,
wherein the plurality of layers of the thermoplastic resin string are connected by inserting the horn in the thermoplastic resin string and drilling while melting.

2. The method for producing a thermoplastic resin string roll according to claim 1,
wherein a groove is formed on an outer face of each of the core pieces, the horn is inserted in the plurality of layers of the thermoplastic resin string that cover the groove, and the plurality of layers of the thermoplastic resin string is drilled while being melted, to form a through-hole that penetrates the plurality of layers of the thermoplastic resin string that cover the groove.

3. The method for producing a thermoplastic resin string roll according to claim 1 or 2,
wherein a contact portion of the horn is in the peripheral face of the plurality of layers of the thermoplastic resin string.

4. The method for producing a thermoplastic resin string roll according to any one of the claims 1 to 3,
wherein the plurality of layers of the thermoplastic resin string that are to be connected are two layers.

5. The method for producing a thermoplastic resin string roll according to any one of the claims 1 to 4,
wherein the horn has a flat end surface.

6. The method for producing a thermoplastic resin string roll according to any one of the claims 1 to 5,
wherein the horn has a cylindrical shape, and the diameter thereof is 1 mm or less.

7. The method for producing a thermoplastic resin string roll according to claim 1,
wherein the thermoplastic resin string is drilled while being melted by inserting the horn in one outermost layer of the plurality of layers of the thermoplastic resin string to a depth of insertion that does not reach the thickness of the outermost layer of the thermoplastic resin string.

8. The method for producing a thermoplastic resin string roll according to claim 7,
wherein the depth of insertion is 4 / 5 or less of the thickness of the outermost layer of the thermoplastic resin string.

9. The method for producing a thermoplastic resin string roll according to claim 7 or 8,
wherein the plurality of layers of the thermoplastic resin string that are to be connected are two layers.

10. The method for producing a thermoplastic resin string roll according to any one of claims 7 to 9,
wherein the horn has a flat end surface.

11. The method for producing a thermoplastic resin string roll according to any one of claims 7 to 10,
wherein the horn has a cylindrical shape, and the diameter thereof is 2 mm or less.
